# EUROPÄISCHE PATENTSCHRIFT

(11) **EP 1 727 704 B1**
(45) Veröffentlichungstag und Bekanntmachung des Hinweises auf die Patenterteilung: **28.04.2010**
(21) Anmeldenummer: 05715898.2
(22) Anmeldetag: 10.03.2005
(51) Int. Cl.: B60N 2/02

(54) **EINSTELLVERFAHREN FÜR EINEN KRAFTFAHRZEUG-SITZ**
REGULATING METHOD FOR A MOTOR VEHICLE SEAT
PROCEDE DE REGLAGE D'UN SIEGE DE VEHICULE AUTOMOBILE

(30) Priorität: 26.03.2004 DE 102004015047
(43) Veröffentlichungstag der Anmeldung: 06.12.2006
(73) Patentinhaber: Bayerische Motoren Werke Aktiengesellschaft, 80809 München (DE)
(72) Erfinder: BORKE, Danny, D-85408 Gammelsdorf (DE)
(86) Internationale Anmeldenummer: PCT/EP2005/002516
(87) Internationale Veröffentlichungsnummer: WO 2005/092665

(56) Entgegenhaltungen:
- DE-U1- 20 204 644
- US-A1- 2003 056 997
- US-B1- 6 450 530

## Beschreibung

Die Erfindung betrifft ein Einstellverfahren für einen Kraftfahrzeug-Sitz.

In modernen Kraftfahrzeugen, insbesondere bei Pkws der Ober-und Luxusklasse, ist es unter der Bezeichnung Sitzmemory bekannt, die jeweils gewählte Sitzeinstellung zur späteren Rekonstruktion in einem Sitzdatenspeicher abzuspeichern und beispielsweise mittels eines individuellen Auswahlschalters jederzeit wieder einzustellen. Hierzu wird auf die in der GB 20 72 881 A, der DE 36 15 210 A1, der DE 36 15 216 A1, und der DE 195 22 897 A1 beschriebenen Einstellverfahren verwiesen.

Die nicht vorveröffentlichte deutsche Patentanmeldung DE 102 46 318.2 beschäftigt sich mit einem sich mit der über die Nutzungsdauer eines PKW zwangsläufig auftretenden geometrischen Veränderung des Fahrzeugsitzes, die sich z. B. als ein Setzen der Sitzpolsterung und/oder eine dauerhafte Verformung des Sitzgestells bemerkbar macht. Die automatisch abgerufene und eingestellte Sitzeinstellung stimmt mit zunehmender Nutzungsdauer immer weniger mit der ursprünglich einmal erfassten und abgespeicherten Sitzeinstellung überein. Hierfür werden bei besetztem Fahrzeugsitz Geometriedaten der 3D-Oberflächenkontur des Fahrzeuginsassen und des Fahrzeugsitzes ermittelt und zu signifikanten personenbezogenen Positionsdaten des Fahrzeugsitzes reduziert.

Aus der US 2003/0056997A1 ist es bekannt, eine morphologische Größe des Fahrzeugbenutzers zu bestimmen. Als Beispiel für eine derartige Größe ist die Körpergröße oder das Körpergewicht angegeben. Auf Grund dieser morphologischen Größe wird der Fahrgast klassifiziert und der Fahrzeugsitz entsprechend den für die jeweilige Klasse gespeicherten Einstellwerten des Sitzes eingestellt.

Ferner geht aus der DE 202 04 644 U1 eine Verstelleinrichtung für einen Fahrzeugsitz hervor, die von einer Sitzbelegungssensorik abhängig gesteuert ist. Dabei ist auch vorgesehen, ggf. eine vorprogrammierte Sitzeinstellung vorzunehmen.

Es ist die Aufgabe der vorliegenden Erfindung, ein Sitzeinstellverfahren anzugeben, das bei einfacher Wirkungsweise eine hohe Funktionssicherheit aufweist.

Diese Aufgabe wird erfindungsgemäss gelöst durch die im Patentanspruch 1 angegebenen Merkmale.

Die Erfindung unterscheidet sich in mehrfacher Hinsicht von den bekannten bzw. vorangemeldeten Sitzeinstellverfahren.

Zum einen liegen die einem Fahrzeugnutzer zugeordneten idealen Sitzpositions-Daten vor. Ideal kann beispielsweise unter ergonomischen Gesichtspunkten oder aber auf fahrertypische Eigenheiten ausgerichtet sein. Es ist ergonomisch und entspricht den Erfordernissen der Fahrsicherheit, das Lenkrad mit abgewinkelten Armen zu bedienen. Gleichwohl empfinden manche Fahrer die Bedienung des Lenkrads mit gestreckten Armen als gewohnt und angenehm. Die idealen Sitzpositionsdaten berücksichtigen die individuellen Gewohnheiten, wenn dies vom Fahrzeugnutzer gewünscht wird.

Zudem wird der jeweilige Fahrzeugnutzer identifiziert und die tatsächlichen Sitzpositions-Daten seinen idealen Daten angepasst. Dies hat den Vorteil, jeweils aktuell dem Fahrer die ideale Sitzposition zu bieten. Auch wenn er aktuell ein Sitzkissen oder eine mobile Rückenstütze verwendet, oder aber wenn er mit dicker Winterkleidung eine veränderte Sitzposition einnimmt, wird dies durch eine entsprechende Einstellungsänderung, z. B. ein Absenken der Sitzfläche und/oder ein Zurückfahren des gesamten Sitzes oder aber der Sitzlehne ausgeglichen.

Es wird somit nicht starr eine stets gleiche Voreinstellung des Fahrzeugsitzes vorgenommen. Vielmehr werden auch vorübergehende, individuelle Änderungen der tatsächlichen Sitzposition berücksichtigt und durch Änderung der Sitzeinstelldaten ausgeglichen.

Wie bei der o.f., nicht vorveröffentlichten deutschen Patentanmeldung DE 102 46 318.2 wird mittels einer stereoskopischen Optik mit einem zugeordneten Bilddatenrechner die tatsächliche Sitzposition ermittelt. In Ergänzung dazu wird der Sitzbenutzer identifiziert und seine individuellen idealen Sitzpositions-Daten als Soll-Daten nicht für die Einstellwerte der Sitzkomponenten verwendet. Vielmehr werden diese Einstellwerte so gewählt, dass die tatsächliche Sitzposition mit der idealen übereinstimmt.

Der Sitzbenutzer sitzt so, wie er beim letzten Mal gesessen hat. Im Gegensatz dazu ist bei einem Sitzmemory der Sitz für denselben Benutzer so eingestellt, wie er beim letzten Mal eingestellt war.

Es ist ohne Weiteres möglich, die idealen Sitzpositions-Daten auch dazu zu verwenden, den Beifahrersitz entsprechend einzustellen, wenn der Fahrzeugbenutzer dort sitzt und er entsprechend identifiziert wird.

Erfindungsgemäß, kann der Fahrzeugbenutzer mittels der stereoskopischen Optik mit dem zugeordneten Bilddatenrechner identifiziert werden. Die Optik in Verbindung mit dem Bilddatenrechner besitzt dann eine mehrfache Funktion. Sie dient beispielsweise bei der Inbetriebnahme des Fahrzeugs und/oder während des Betriebs dazu, den Fahrzeugbenutzer zu identifizieren. Zusätzlich wird damit die tatsächliche Sitzposition ermittelt und die ggf. erforderliche und durch Änderung der Sitzeinstellparameter durchgeführte Änderung der Sitzposition durch optische Kontrolle gesteuert.

Eine vorteilhafte Ausgestaltung des erfindungsgemäßen Verfahrens ist in dem Unteranspruch 2 angegeben: Wie in der o.f., nicht vorveröffentlichten deutschen Patentanmeldung

DE 102 46 318.2 beschrieben, kann nach Anspruch 2 die ideale Sitzposition vorab ermittelt werden. Hierzu ist es allerdings vorgesehen, dass der Fahrzeugbenutzer tatsächlich diese Position im Fahrzeug einnimmt. Um dem Fahrer die damit verbundenen Unsicherheit zu nehmen, ob "seine" dabei vorliegende Position tatsächlich die ideale ist, kann die Ermittlung der idealen Sitzpositionswerte völlig losgelöst von der Benutzung des Fahrzeugs, beispielsweise in einer geeigneten Messapparatur vorgenommen werden. Es müssen dann lediglich die sich dabei ergebenden Positionswerte ins Fahrzeug übertragen und mit den für den Benutzer signifikanten Identifizierungsmerkmalen verbunden werden.

Das erfindungsgemäße Sitzeinstellverfahren ist aufgrund preiswert verfügbarer kleiner CCD-Videokameras bzw. Digitalkameras und Bilddatenrechner kostengünstig realisierbar und in Kraftfahrzeuge integrierbar.

## Patentansprüche

1. Einstellverfahren für einen Kraftfahrzeug-Sitz, bei dem in einem Sitzdatenspeicher die einem Fahrzeugnutzer individuell zugeordneten idealen Sitzpositions-Daten vorgehalten werden, bei dem ferner mittels einer stereoskopischen Optik und einem zugeordneten Bilddatenrechner der jeweilige Fahrzeugnutzer identifiziert wird und ihm seine idealen Sitzpositionsdaten zugeordnet werden, bei dem die tatsächliche Sitzposition mittels der stereoskopischen Optik mit dem zugeordneten Bilddatenrechner ermittelt wird, bei dem die Sitzeinstellungen so vorgenommen werden, dass die tatsächliche Sitzposition zumindest annähernd der idealen Sitzposition entspricht und bei dem auch vorübergehende, individuelle Änderungen der tatsächlichen Sitzposition berücksichtigt und durch Änderung der Sitzeinstelldaten ausgeglichen werden.

2. Einstellverfahren nach Anspruch 1, **dadurch gekennzeichnet, dass** die ideale Sitzposition vorab ermittelt wird.

## Claims

1. An adjusting method for a motor vehicle seat, wherein the ideal seat position data individually associated with a vehicle user are kept in a seat data memory, wherein the respective vehicle user is also identified by means of a stereoscopic optical element and an associated image data computer and his ideal seat position data are associated with him, wherein the actual seat position is determined by the associated image data computer using the stereoscopic optical element, wherein the seat adjustments are carried out in such a way that the actual seat position at least virtually corresponds to the ideal seat position and wherein temporary, individual changes of the actual seat position are also taken into account and compensated by changing the seat adjustment data.

2. An adjusting method according to claim 1, **characterised in that** the ideal seat position is determined in advance.

## Revendications

1. Procédé de réglage d'un siège de véhicule automobile selon lequel, les données de la position idéale du siège, associées individuellement à un utilisateur du véhicule, sont enregistrées dans une mémoire de données de siège,
à l'aide d'une optique stéréoscopique et d'un calculateur de données d'image, associé, on identifie l'utilisateur respectif du véhicule et on lui associe ses données de position idéale du siège,
on détermine la position effective du siège à l'aide de l'optique stéréoscopique avec le calculateur de données d'image associé,
on effectue les réglages du siège de façon que la position effective du siège, corresponde au moins sensiblement à la position idéale du siège, et
on tient également compte de variations individuelles transitoires de la position effective du siège et on compense en modifiant les données de réglage du siège.

2. Procédé de réglage selon la revendication 1,
**caractérisé en ce qu'**
on détermine au préalable la position idéale du siège.
